# EUROPEAN PATENT SPECIFICATION

(11) **EP 4 066 698 B1**
(45) Date of publication and mention of the grant of the patent: **06.03.2024**
(21) Application number: 22150859.1
(22) Date of filing: 11.01.2022
(51) Int. Cl.: A47J 27/00, A47J 37/06, A47J 37/07, A47J 37/10

(54) **MULTIFUNCTIONAL COOKING OVEN**
MULTIFUNKTIONALER KOCHOFEN
FOUR DE CUISSON MULTIFONCTION

(30) Priority: 31.03.2021 CN 202110351355
(43) Date of publication of application: 05.10.2022
(73) Proprietor: Alpha Home Group Limited, 999077 Hong Kong (HK)
(72) Inventor: Chow, Jesse, 999077 Hong Kong (HK)
(74) Representative: Wang, Bo

(56) References cited:
- CN-A- 106 073 484
- CN-A- 110 973 995
- CN-A- 112 237 384
- CN-U- 207 520 040
- GB-A- 2 468 014
- US-A1- 2019 254 473

## Description

### TECHNICAL FIELD

The present invention relates to a multifunctional cooking oven.

### BACKGROUND ART

Any of the existing frying ovens has a single function and only has the function of single-sided frying; any of the existing hotpot ovens has a single function and only has the function of hot pot; any of the existing baking ovens has a single function and only has the function of baking. Therefore, a user needs to buy a frying oven, a hot pot oven and a baking oven respectively to meet his or her frying, hot pot and baking needs; as thus, the cost is large, and the frying oven, the hot pot oven and the baking oven occupy much space; in addition, if the user needs to fry two kinds of food at the same time, he or she will have to use two frying ovens to achieve his or her aim. Document CN112 237 384 relates to a kind of multifunctional domestic cuisines machine, including pot and pot cover, the inside of described pot is disposed with opening up lower heating pot, the internally installed of this pot cover has downward opening upper heating pot, the side of described pot cover is rotationally connected with pot by hinge, described lower heating pot and the bottom outside of upper heating pot are mounted on adding heat pipe, the upper end bead of described pot or the lower end bead of pot cover are provided with a circle sealing ring, and the rotational angle of described pot cover is 0-180 °.

### SUMMARY OF INVENTION

The present invention aims to provide a multifunctional cooking oven which can meet its user's various cooking needs.

The purpose of the present invention is by a multifunctional cooking oven according to claim 1.

A frying oven can be formed when the first frying plate is installed onto the oven cover and the second frying plate is installed onto the oven body; the frying oven can fry and roast food alone, fry and roast two kinds of food at the same time or fry and roast two sides of food at the same time to meet its user's different frying and roasting needs; if the user needs to fry and roast two sides of food at the same time, the user can place the food on the second frying plate and then buckle the oven cover with the oven body; in addition, the oven body is equipped with an elastic device inside, the elastic device can automatically adjust the height of the second frying plate as per the thicknesses of different food so as to perfectly clamp the food between the first frying plate on the oven cover and the second frying plate on the oven body, ensure sufficient contact of food while the food is not squashed to breakage or deformation. Therefore, the frying oven can achieve good frying and roasting effect and can meet its user's cooking needs.

Additionally, the second frying plate is replaced with a pot body to form a hotpot oven; the user can use the first frying plate for frying and roasting food and also can use the hotpot oven for cooking food.

Additionally, the user takes out the first frying plate, replaces it with a filter screen, replaces the second frying plate with a pot body, places a grill in the pot body, places the food on the grill, then buckles the pot cover on the pot body, and then starts the first heating device; at the moment, the first heating device bakes the food on the grill to form a baking oven to meet the user's baking need; therefore, the multifunctional oven can meet its user's different cooking needs; in a word, it has multiple functions and thus possesses powerful practicability.

The present invention also provides the following technical solutions:
Further, the multifunctional cooking oven also comprises an oil receiving box which is arranged on the outer wall of the oven body. The oil receiving box can collect the greasy dirt generated from food cooking and thus can improve the cleanliness of the multifunctional cooking oven.

Further, the oven cover is equipped with a handle and a second control panel is arranged at the handle; the second control panel is electrically connected with the first heating device; the oven cover is equipped with a first holding cavity at the position corresponding to the first heating device; the oven cover is equipped with a first locking device at the position adjacent to the first holding cavity and the oven cover is equipped with a first limit groove at the position adjacent to the first holding cavity; the first frying plate extends outwards from the first oil discharge channel, the first frying plate is placed in the first holding cavity, the first oil discharge channel is placed in the first limit groove; the inlet of the first oil discharge channel is connected with the first frying plate, the outlet of the first oil discharge channel extends out of the oven cover and faces the oil receiving box, and the first locking device locks the first frying plate.

The oven cover is provided with a handle to facilitate the opening or closing of the oven cover; the first frying plate is locked onto the oven cover via a first locking device wherein the operations are simple and the unlocking is convenient; the first oil discharge channel of the first frying plate faces the oil receiving box so as to directly discharge the greasy dirt into the oil receiving box for convenience of cleaning; the second control panel controls the first heating device separately; the user can control the temperature of the second heating device through the second control panel wherein the operations are simple.

Further, the first locking device comprises a locking hook and a locking plate wherein the locking hook is rotationally arranged on the oven cover and clings to the first holding cavity; the locking plate is arranged on the oven cover and clings to the first holding cavity; the first frying plate is equipped with a socket and a locking port, the locking plate is inserted into the socket, the locking hook turns over and then tightens the locking port, and the first frying plate is locked onto the oven cover. After placing the first frying plate in the first holding cavity and inserting the locking plate into the socket, if the user rotates the locking hook to lock the locking port, the user can lock the first frying plate tightly; therefore, the operations are very simple.

Further, the oven body is equipped with a second limit groove at the position adjacent to the inner cavity of the oven body, the second frying plate extends outwards from the second oil discharge channel; the second oil discharge channel is placed in the second limit groove, the inlet of the second oil discharge channel is connected with the second frying plate, and the outlet of the second oil discharge channel extends out of the oven body and faces the oil receiving box. The second oil discharge channel of the second frying plate faces the oil receiving box so as to directly discharge the greasy dirt into the oil receiving box for convenience of cleaning.

Further, the elastic device comprises a base plate, a first elastic supporting arm and a second elastic supporting arm wherein the first elastic supporting arm is arranged in the inner cavity of the oven body in a rotating manner, the first elastic supporting arm faces the left and right sides of the oven body, the second elastic supporting arm is arranged in the inner cavity of the oven body in a rotating manner, and the second elastic supporting arm faces the front and rear sides of the oven body; the first elastic supporting arm and the second elastic supporting arm are connected with the base plate respectively, the first elastic supporting arm and the second elastic supporting arm jointly drive the base plate to go up and down, and the second heating device is arranged on the base plate to follow the base plate to go up and down. After he food is placed on the second frying plate, when the oven cover presses the food, the food pushes the second frying plate, and then the second frying plate deforms the first elastic supporting arm and the second elastic supporting arm so as to move the second frying plate downwards, prevent the food from close contact with the first frying plate or the second frying plate and thus prevent the food from being squashed to deformation or burnt, not only greatly improving the frying and roasting effect but also improving the practicability of the multifunctional oven.

Further, the pot body is equipped with a supporting lug wherein the supporting lug is equipped with a second locking device, the oven body is equipped with a third limit groove at the position corresponding to the supporting lug; the supporting lug is placed in the third limit groove, and the second locking device locks the pot body on the oven body. The oven body is equipped with an elastic device and the pot body is equipped with a second locking device at the position of its lug; when the user places the pot body in the inner cavity of the oven body, the second locking device will lock the pot body onto the oven body to prevent the elastic device from pushing the pot body to move up and down due to the weight change of the pot body; therefore, such design greatly improves the use safety of the multifunctional oven.

Further, the second locking device comprises a housing and a paddle wherein the housing is equipped with a first opening and a second opening; the paddle is placed in the inner cavity of the housing, one end of the paddle extends out of the first opening to form an insertion part, the other end of the paddle extends out of the second opening to form a pushing part, the oven body is equipped with a slot at the position corresponding to the insertion part and the insertion part is inserted into the slot and the pot body is locked onto the oven body. By pushing the pushing part of the paddle, the user can control the insertion part of the paddle to extend out or into the slot in order to lock or loosen the third limit groove by the supporting lug and thus lock the pot body onto the oven body or loosen the pot body from the oven body; therefore, the operations are simple.

Further, the first control panel is arranged on the outer wall of the oven body in a rotating manner, and the first control panel is electrically connected with the second heating device. The first control panel can rotate, not only convenient for the first control panel to change its position with the state of the multifunctional oven but also convenient for the user to operate the first control panel.

Further, the surface of the grill is spaced with air deflecting pores, the grill extends downwards out of the supporting feet, and the supporting feet are equipped with high temperature resistant foot sleeves. The supporting feet are equipped with high temperature resistant foot sleeves so that the grill is stably placed in the pot body and is not easy to be deformed; the surface of the grill is equipped with air deflecting pores so that the hot air circulates via the air deflecting pores to heat the food on the grill and thus greatly improve the baking efficiency.

The present invention has the beneficial effects that:
In the present invention, a frying oven can be formed when the first frying plate is installed onto the oven cover and the second frying plate is installed onto the oven body; the frying oven can fry and roast food alone, fry and roast two kinds of food at the same time or fry and roast two sides of food at the same time to meet its user's different frying and roasting needs; if the user needs to fry and roast two sides of food at the same time, the user can place the food on the second frying plate and then buckle the oven cover with the oven body; in addition, the oven body is equipped with an elastic device inside, the elastic device can automatically adjust the height of the second frying plate as per the thicknesses of different food so that the first frying plate on the oven cover and the second frying plate on the oven body can perfectly clamp the food, ensure sufficient contact of food while the food is not squashed to breakage or deformation. Therefore, the frying oven can achieve good frying and roasting effect and can meet its user's cooking needs.

In the present invention, the second frying plate is replaced with a pot body to form a hotpot oven; the user can use the first frying plate for frying and roasting food and also can use the hotpot oven for cooking food.

In the present invention, the user takes out the first frying plate, replaces it with a filter screen, replaces the second frying plate with a pot body, places a grill in the pot body, places the food on the grill, then buckles the pot cover on the pot body, and then starts the first heating device; at the moment, the first heating device bakes the food on the grill to form a baking oven to meet the user's baking need; therefore, the multifunctional oven can meet its user's different cooking needs; in a word, it has multiple functions and thus possesses powerful practicability.

In the present invention, the supporting feet are equipped with high temperature resistant foot sleeves so that the grill is stably placed in the pot body and is not easy to be deformed; the surface of the grill is equipped with air deflecting pores so that the hot air circulates via the air deflecting pores to heat the food on the grill and thus greatly improve the baking efficiency.

### BRIEF DESCRIPTION OF DRAWINGS

FIG. 1 is a schematic diagram of the multifunctional cooking oven.
FIG. 2 is a schematic diagram of the multifunctional cooking oven at another angle of view.
FIG. 3 is a schematic assembly drawing of the multifunctional cooking oven.
FIG. 4 is a schematic diagram of the multifunctional cooking oven assembled into a frying oven.
FIG. 5 is a schematic cutaway view of FIG. 4.
FIG. 6 is a schematic diagram of the multifunctional cooking oven assembled into a frying oven in another state.
FIG. 7 is an exploded view of the multifunctional cooking oven assembled into a frying oven.
FIG. 8 is an assembly drawing of the multifunctional cooking oven assembled into a hotpot oven.
FIG. 9 is an assembly drawing of the multifunctional cooking oven assembled into a hotpot oven from another angle.
FIG. 10 is a schematic diagram of the multifunctional cooking oven assembled into a hotpot oven.
FIG. 11 is a schematic diagram of the multifunctional cooking oven assembled into a hotpot oven from another angle.
FIG. 12 is a schematic cutaway view of FIG. 10.
FIG. 13 is an assembly drawing of the multifunctional cooking oven assembled into a baking oven.
FIG. 14 is a schematic diagram of the multifunctional cooking oven assembled into a baking oven.
FIG. 15 is a schematic cutaway view of the multifunctional cooking oven assembled into a baking oven.

### DETAILED EMBODIMENTS

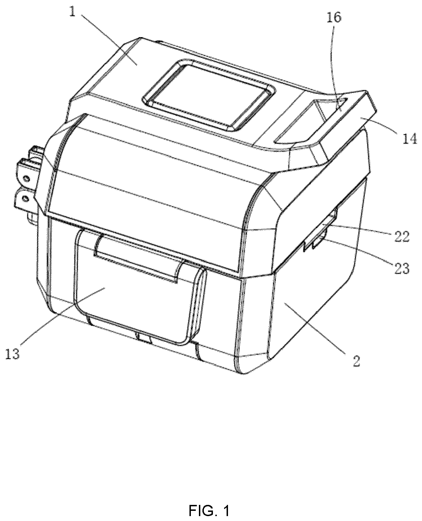

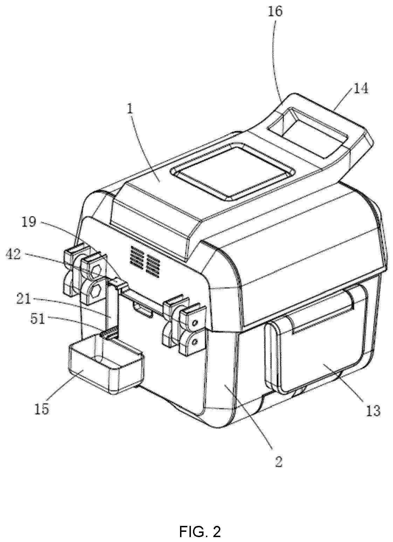

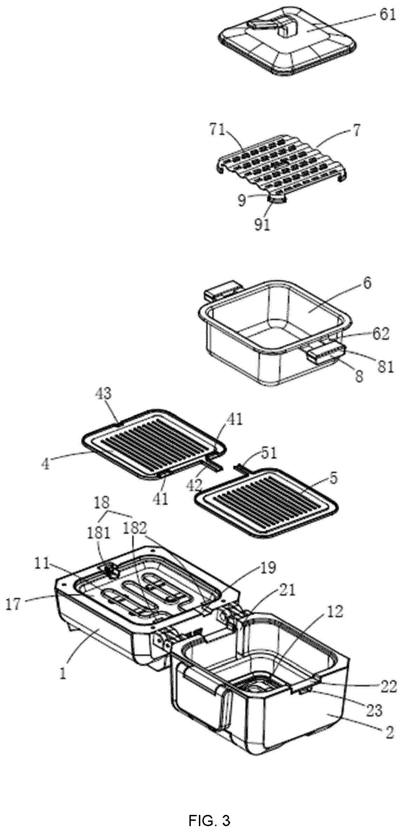

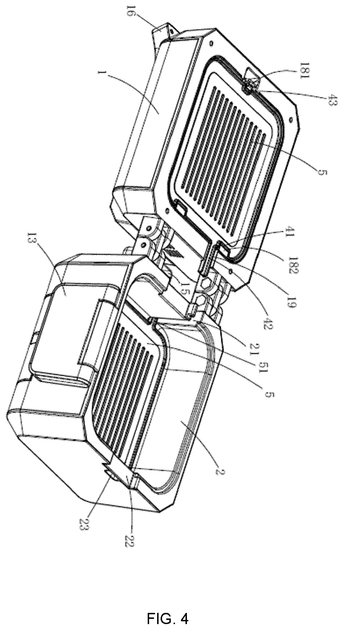

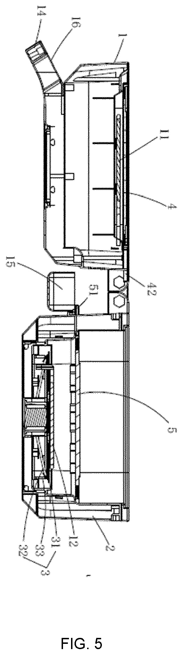

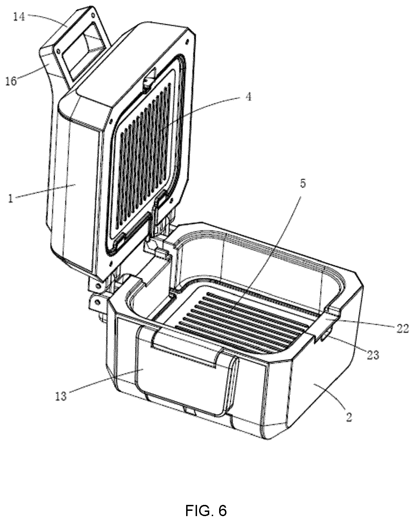

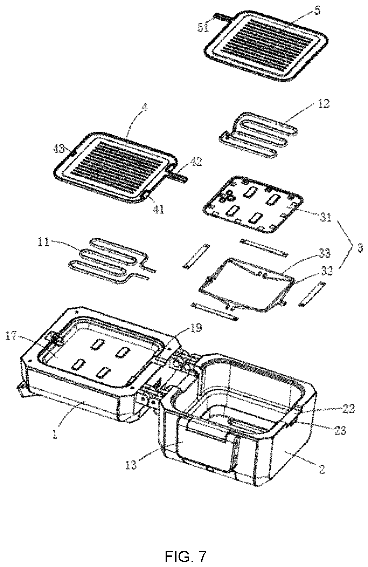

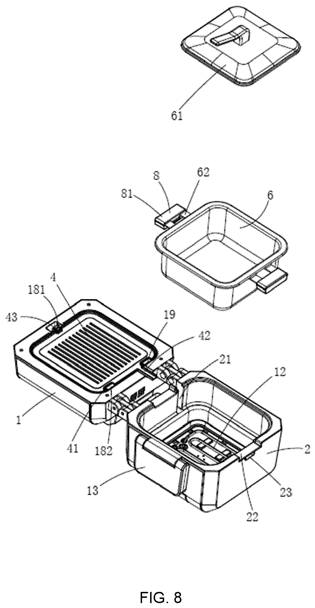

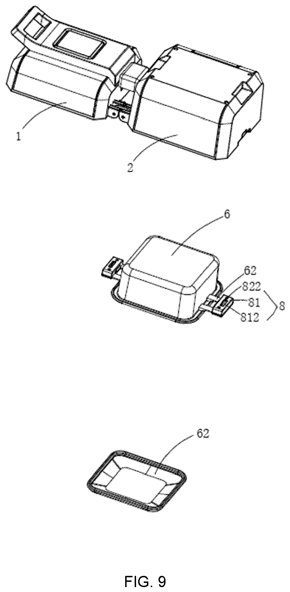

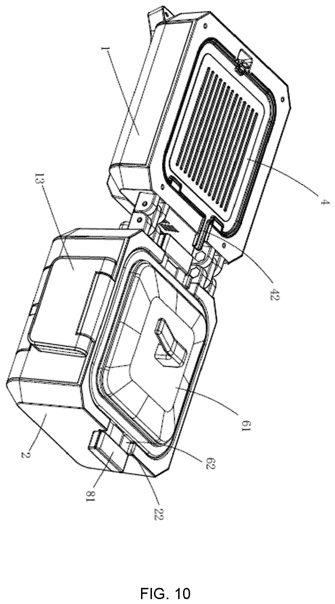

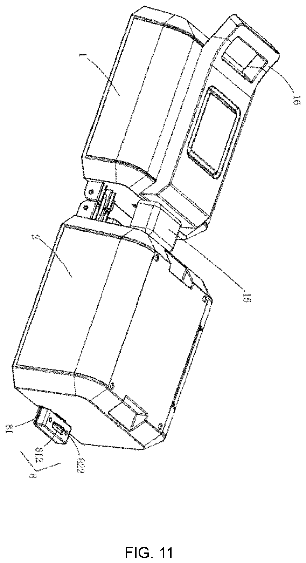

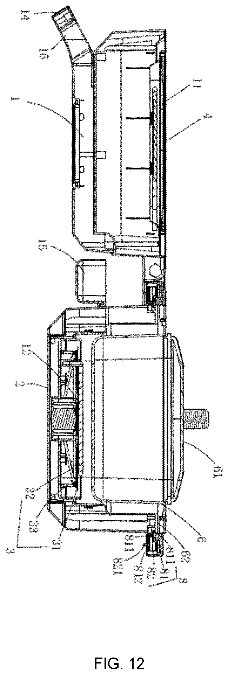

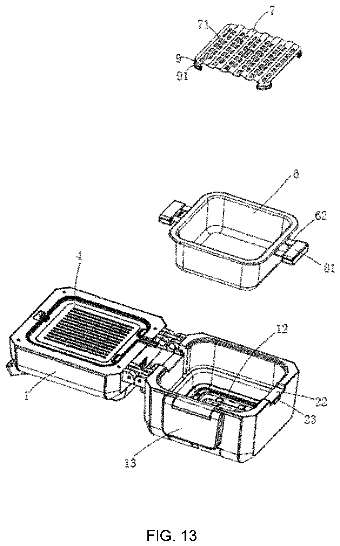

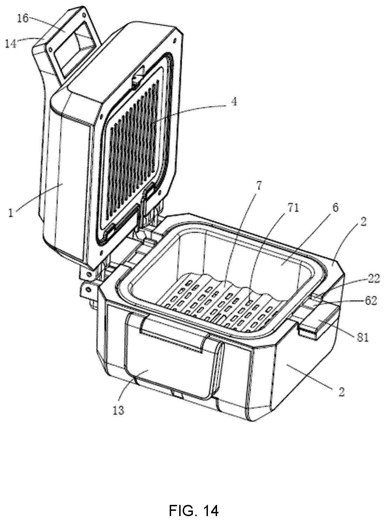

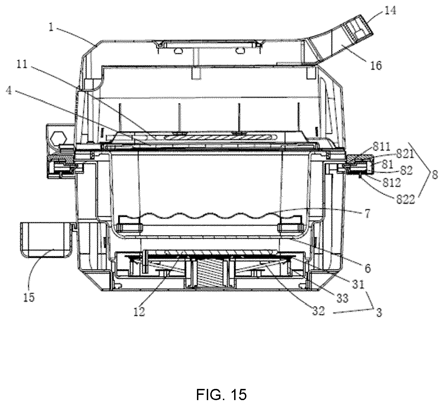

The present invention will be described more clearly and fully in conjunction with the accompanying drawings and embodiments:
In an embodiment and as shown from FIG. 1 to FIG. 15, the multifunctional cooking oven comprises a oven cover (1), a oven body (2), a first heating device (11), a second heating device (12), an elastic device (3), a first control panel (13), a first frying plate (4), a second frying plate (5), a pot body (6), a grill (7), a pot cover (61), a second control panel (14), an oil receiving box (15), a baking fan (not shown in the figures), a cooling fan (not shown in the figures) and an upper filter screen (not shown in the figures) wherein the oven cover (1) is hinged with the oven body (2), the rotation angle between the oven cover (1) and the oven body (2) falls in between 0 degree and 180 degrees.

The oven cover (1) is equipped with a handle (16) and a second control panel (14) arranged at the handle (16); the first heating device (11) is a heating tube and the first heating device (11) is arranged on the bottom surface of the oven cover (1); the baking fan is arranged in the inner cavity of the oven cover (1), the first heating device (11) is electrically connected with the second control panel (14); the oven cover (1) is equipped with a first holding cavity (17) at the position corresponding to the first heating device (11) and the oven cover (1) is equipped with a first locking device (18) at the position adjacent to the first holding cavity (17) and the oven cover (1) is equipped with a first limit groove (19) at the position adjacent to the first holding cavity (17).

The first locking device (18) comprises a locking hook (181) and a locking plate (182) wherein the locking hook (181) is rotationally arranged on the oven cover (1) and clings to the first holding cavity (17); the locking plate (182) is arranged on the oven cover (1) and clings to the first holding cavity (17).

The first frying plate (4) is equipped with a socket (41) and a locking port (43), the first frying plate (4) extends outwards from the first oil discharge channel (42), the first frying plate (4) is placed in the first holding cavity (17), the first oil discharge channel (42) is placed in the first limit groove (19), the locking plate (182) is inserted into the socket (41), the inlet of the first oil discharge channel (42) is connected with the first frying plate (4), the outlet of the first oil discharge channel (42) extends out of the oven cover (1) and faces the oil receiving box (15); at the moment, if the user turns over the locking hook (181), the locking hook (181) will lock the locking port (43) tightly and the first frying plate (4) will be locked tightly onto the oven cover (1).

The elastic device (3) comprises a base plate (31), a first elastic supporting arm (32) and a second elastic supporting arm (33) wherein the first elastic supporting arm (31) is arranged in the inner cavity of the oven body (2) in a rotating manner, the first elastic supporting arm (32) faces the left and right sides of the oven body (2), the second elastic supporting arm (33) is arranged in the inner cavity of the oven body (2) in a rotating manner, and the second elastic supporting arm (33) faces the front and rear sides of the oven body (2).
The first elastic supporting arm (32) and the second elastic supporting arm (33) are connected with the base plate (31) respectively, the first elastic supporting arm (32) and the second elastic supporting arm (33) jointly drive the base plate (31) to go up and down; the second heating device (12) is a heating tube and the second heating device (12) is arranged on the base plate (31) to follow the base plate (31) to go up and down, and the cooling fan is arranged in the inner cavity of the oven body.

The oven body (2) is designed with a second limit groove (21) and a third limit groove (22) at the position adjacent to the inner cavity of the oven body (2), and the oven body (2) is designed with a slot (23) at the position under the third limit groove (22).

The second frying plate (5) extends outwards from the second oil discharge channel (51); the second frying plate (5) is placed in the inner cavity of the oven body (2) and sits on the base plate (31); the second oil discharge channel (51) is placed in the second limit groove (21), the inlet of the second oil discharge channel (51) is connected with the second frying plate (5), and the outlet of the second oil discharge channel (51) extends outwards from the oven body (2) and faces the oil receiving box (15).

The pot body (6) is equipped with a supporting lug (62) wherein the supporting lug (62) is equipped with a second locking device (8); the second locking device (8) comprises a housing (81) and a paddle (82) wherein the housing (81) is equipped with a first opening (811) and a second opening (812); the paddle (82) is placed in the inner cavity of the housing (81), one end of the paddle (82) extends out of the first opening (811) to form an insertion part (821), the other end of the paddle (82) extends out of the second opening (812) to form a pushing part (822).

The first control panel (13) is arranged on the outer wall of the oven body (2) in a rotating manner, and the first control panel (13) is electrically connected with the second heating device (12).

The surface of the grill (7) is spaced with air deflecting pores (71), the grill (7) extends downwards out of the supporting feet (9), and the supporting feet (9) are equipped with high temperature resistant foot sleeves (91).

When the multifunctional oven is assembled into a frying oven (in the frying and roasting mode), it has the functions of single-sided frying, double-sided frying and simultaneous frying of two kinds of food; after opening up the oven cover (1) and the oven body (2) at an angle of 180 degrees; the user installs the first frying plate (1) onto the oven cover (1) and installs the second frying plate (5) onto the oven body (2) to form a frying oven; at the moment, the user places the food on the first frying plate (4) and/or the second frying plate (5) for frying; the user can control the temperature of the first frying plate (4) through the second control panel (14), control the temperature of the second frying plate (5) through the first control panel (13) and thus adjust the frying and roasting status of food; in addition, the user can turn over the first control panel (13) to make the first control panel (13) parallel the second frying plate (5), convenient for the user to adjust the temperature of the second frying plate (5).

Additionally, the user can fry two sides of food at a time with the operating steps as follows: firstly, the user places the food on the second frying plate (5) for frying [at the moment, the bottom of food contacts the second frying plate (5) and then the second frying plate (5) fries the bottom of food]; and then the user rotates the oven cover (1) to buckle the oven cover (1) with the oven body (2), at the moment, the first frying plate (4) clings to the food and fries the food [at the moment, the surface of food contacts the first frying plate (4) and then the first frying plate (4) fries the surface of food]; the oven body (2) is equipped with an elastic device (3) inside, the elastic device (3) automatically adjusts the height of the second frying plate (5) as per the thicknesses of different food so that the first frying plate (4) on the oven cover (1) and the second frying plate (5) on the oven body (2) can perfectly clamp the food, ensure sufficient contact of food while the food is not squashed to breakage or deformation. Therefore, the frying oven can achieve good frying and roasting effect and can meet its user's cooking needs (such as fried beef steak).

When the multifunctional oven is assembled into a hotpot oven (in the hotpot mode), it has the functions of hotpot (in the hotpot mode) and frying/roasting (in the frying/roasting mode); the user also can take out the second frying plate (5) and replace it with the pot body (6) with the following steps of installing the pot body (6): firstly, the user places the pot body (6) in the inner cavity of the oven body (2), pulls the pushing part (822) of the paddle (82) outwards to retract the insertion part (821) of the paddle (82) into the inner cavity of the housing (81), successfully place the supporting lug of the pot body (6) in the third limit groove (22); and then, the user pushes the pushing part (822) of the paddle (82) inwards to insert the insertion part (821) of the paddle (82) into the slot (23) and thus lock the pot body (6) onto the oven body (2) and thus prevent the elastic device (3) from pushing the pot body (5) to move up and down due to the weight change of the pot body (6); and then, the user puts the food in the pot body (6) and adds water and finally buckles the pot cover (61) with the pot body (6) to form a hotpot oven and meet its user's different cooking needs.

When the multifunctional oven is assembled into an air fryer (in the barbecue mode), the user takes out the first frying plate and replaces it with an upper filter screen and then takes out the second frying plate (5) and replaces it with the pot body (6) with the following steps of installing the pot body (6): firstly, the user places the pot body (6) in the inner cavity of the oven body (2), pulls the pushing part (822) of the paddle (82) outwards to retract the insertion part (821) of the paddle (82) into the inner cavity of the housing (81), successfully place the supporting lug of the pot body (6) in the third limit groove (22); and then, the user pushes the pushing part (822) of the paddle (82) inwards to insert the insertion part (821) of the paddle (82) into the slot (23) and thus lock the pot body (6) onto the oven body (2); and then, the user places the grill (7) on the pot body (6) to form a baking oven and meet its user's different cooking needs.

The user places the food on the grill (7) and finally rotates the oven cover (1) to buckle the oven cover (1) with the oven body (2); the user starts the barbecue mode through the second control panel (14); at the moment, the first heating device (11), the baking fan and the cooling fan are started simultaneously; the first heating device (11) heats the food on the grill (7), and the baking fan blows the hot air towards the food; the grill (7) is wavy, the grill (7) is designed with air deflecting pores (71), and the wavy grill (7) can enhance the heat convection effect to make the hot air contact the food more effectively and evenly and thus heat the food evenly, and the cooling fan can timely blow away the oily fume generated from the barbecuing process and thus greatly improve the barbecuing effect.

## Claims

1. A multifunctional cooking oven comprises a oven cover (1), an oven body (2), a first heating device (11), a second heating device (12), an elastic device (3) and a first control panel (13), wherein the oven cover is hinged with the oven body, the rotation angle between the oven cover and the oven body falls in between 0 degree and 180 degrees; the first heating device is arranged on the bottom surface of the oven cover, and the elastic device is arranged in the inner cavity of the oven body; the second heating device is arranged in the inner cavity of the oven body and connected with the elastic device, which drives the second heating device to go up and down;
the multifunctional cooking oven also comprises a first frying plate (4) and a second frying plate (5); the first frying plate is detachably arranged on the oven cover and clings to the first heating device; the second frying plate is detachably arranged in the inner cavity of the oven body and clings to the second heating device to form a frying oven with the double-sided heating function;
the multifunctional cooking oven also comprises a pot body (6) and
the second frying plate can be replaced with the pot body, wherein the pot body sits in in the inner cavity of the oven body and clings to the second heating device; the multifunctional cooking oven also comprises a pot cover, which is buckled onto the pot body to form a hot pot oven;
the multifunctional cooking oven also comprises an upper filter screen and a grill (7); the first frying plate can be replaced with the upper filter screen, the second frying plate can be replaced with the pot body, the pot body sits in the inner cavity of the oven body and clings to the second heating device, and the grill is placed in the pot body to form an oven.

2. The multifunctional cooking oven in accordance with Claim 1, which is **characterized in that** it also comprises an oil receiving box (15) which is arranged on the outer wall of the oven body

3. The multifunctional cooking oven in accordance with Claim 2, which is **characterized in that** the oven cover is equipped with a handle (16) and a second control panel (14) is arranged at the handle; the second control panel is electrically connected with the first heating device; the oven cover is equipped with a first holding cavity at the position corresponding to the first heating device; the oven cover is equipped with a first locking device (18) at the position adjacent to the first holding cavity and the oven cover is equipped with a first limit groove (19) at the position adjacent to the first holding cavity; the first frying plate extends outwards from the first oil discharge channel, the first frying plate is placed in the first holding cavity, the first oil discharge channel is placed in the first limit groove; the inlet of the first oil discharge channel is connected with the first frying plate, the outlet of the first oil discharge channel extends out of the oven cover and faces the oil receiving box, and the first locking device locks the first frying plate.

4. The multifunctional cooking oven in accordance with Claim 3, which is **characterized in that** the first locking device comprises a locking hook (181) and a locking plate (182) wherein the locking hook is rotationally arranged on the oven cover and clings to the first holding cavity; the locking plate is arranged on the oven cover and clings to the first holding cavity; the first frying plate is equipped with a socket and a locking port, the locking plate is inserted into the socket, the locking hook turns over and then tightens the locking port, and the first frying plate is locked onto the oven cover.

5. The multifunctional cooking oven in accordance with Claim 2, which is **characterized in that** the oven body is equipped with a second limit groove (21) at the position adjacent to the inner cavity of the oven body, the second frying plate extends outwards from the second oil discharge channel; the second oil discharge channel is placed in the second limit groove, the inlet of the second oil discharge channel is connected with the second frying plate, and the outlet of the second oil discharge channel extends out of the oven body and faces the oil receiving box.

6. The multifunctional cooking oven in accordance with Claim 1, which is **characterized in that** the elastic device comprises a base plate (31), a first elastic supporting arm (32) and a second elastic supporting arm (33) wherein the first elastic supporting arm is arranged in the inner cavity of the oven body in a rotating manner, the first elastic supporting arm faces the left and right sides of the oven body, the second elastic supporting arm is arranged in the inner cavity of the oven body in a rotating manner, and the second elastic supporting arm faces the front and rear sides of the oven body; the first elastic supporting arm and the second elastic supporting arm are connected with the base plate respectively, the first elastic supporting arm and the second elastic supporting arm jointly drive the base plate to go up and down, and the second heating device is arranged on the base plate to follow the base plate to go up and down.

7. The multifunctional cooking oven in accordance with Claim 1, which is **characterized in that** the pot body is equipped with a supporting lug (62) wherein the supporting lug is equipped with a second locking device, the oven body is equipped with a third limit groove at the position corresponding to the supporting lug; the supporting lug is placed in the third limit groove, and the second locking device locks the pot body on the oven body.

8. The multifunctional cooking oven in accordance with Claim 7, which is **characterized in that** the second locking device comprises a housing (81) and a paddle (82) wherein the housing is equipped with a first opening and a second opening; the paddle is placed in the inner cavity of the housing, one end of the paddle extends out of the first opening to form an insertion part, the other end of the paddle extends out of the second opening to form a pushing part, the oven body is equipped with a slot at the position corresponding to the insertion part and the insertion part is inserted into the slot and the pot body is locked onto the oven body.

9. The multifunctional cooking oven in accordance with Claim 2, which is **characterized in that** the first control panel is arranged on the outer wall of the oven body in a rotating manner, and the first control panel is electrically connected with the second heating device.

10. The multifunctional cooking oven in accordance with Claim 1, which is **characterized in that** the surface of the grill is spaced with air deflecting pores (71), the grill extends downwards out of the supporting feet, and the supporting feet are equipped with high temperature resistant foot sleeves.

## Patentansprüche

1. Ein Multifunktionsgarofen umfasst eine Ofenabdeckung (1), einen Ofenkörper (2), eine erste Heizvorrichtung (11), eine zweite Heizvorrichtung (12), eine elastische Vorrichtung (3) und ein erstes Bedienfeld (13), wobei die Ofenabdeckung mit dem Ofenkörper gelenkig verbunden ist, der Drehwinkel zwischen der Ofenabdeckung und dem Ofenkörper zwischen 0 Grad und 180 Grad liegt; die erste Heizvorrichtung an der Bodenfläche der Ofenabdeckung angeordnet ist und die elastische Vorrichtung in dem inneren Hohlraum des Ofenkörpers angeordnet ist, die zweite Heizvorrichtung in dem inneren Hohlraum des Ofenkörpers angeordnet ist und mit der elastischen Vorrichtung verbunden ist, die die zweite Heizvorrichtung antreibt, um auf und ab zu gehen, der Multifunktionsgarofen auch eine erste Bratplatte (4) und eine zweite Bratplatte (5) umfasst, die erste Bratplatte ist abnehmbar an der Ofenabdeckung angeordnet und haftet an der ersten Heizeinrichtung; die zweite Bratplatte ist abnehmbar im Innenraum des Ofenkörpers angeordnet und haftet an der zweiten Heizeinrichtung zur Bildung eines Bratofens mit beidseitiger Heizfunktion; der Multifunktionsgarofen umfasst ferner einen Topfkörper (6) und die zweite Bratplatte ist durch den Topfkörper ersetzbar, wobei der Topfkörper im Innenraum des Ofenkörpers sitzt und an der zweiten Heizeinrichtung haftet; der Multifunktionsgarofen umfasst auch einen Topfdeckel, der auf den Topfkörper geknickt wird, um einen heißen Topf zu bilden, der Multifunktionsgarofen umfasst auch ein oberes Filtersieb und einen Grill (7), die erste Bratplatte kann durch das obere Filtersieb ersetzt werden, die zweite Bratplatte kann durch den Topfkörper ersetzt werden, der Topfkörper sitzt im inneren Hohlraum des Ofenkörpers und haftet an der zweiten Heizvorrichtung, und der Grill wird in den Topfkörper gesetzt, um einen Ofen zu bilden.

2. Multifunktionsgarofen nach Anspruch 1, **dadurch gekennzeichnet, dass** er zusätzlich einen Ölauffangkasten (15) umfasst, der an der Außenwand des Ofenkörpers angeordnet ist.

3. Multifunktionsgarofen nach Anspruch 2, **dadurch gekennzeichnet, dass** der Ofendeckel mit einem Handgriff (16) ausgestattet ist und an dem Handgriff ein zweites Bedienfeld (14) angeordnet ist, das zweite Bedienfeld elektrisch mit der ersten Heizeinrichtung verbunden ist, der Ofendeckel an der der ersten Heizeinrichtung entsprechenden Position mit einem ersten Aufnahmehohlraum ausgestattet ist, der Ofendeckel an der an den ersten Aufnahmehohlraum angrenzenden Position mit einer ersten Verriegelungseinrichtung (18) ausgestattet ist und der Ofendeckel an der an den ersten Aufnahmehohlraum angrenzenden Position mit einer ersten Begrenzungsnut (19) ausgestattet ist, die erste Bratplatte erstreckt sich von dem ersten Ölaustragskanal nach außen, die erste Bratplatte ist in dem ersten Aufnahmehohlraum angeordnet, der erste Ölaustragskanal ist in der ersten Begrenzungsnut angeordnet, der Einlass des ersten Ölaustragskanals ist mit der ersten Bratplatte verbunden, der Auslass des ersten Ölaustragskanals erstreckt sich aus der Ofenabdeckung heraus und ist dem Ölauffangbehälter zugewandt, und die erste Verriegelungsvorrichtung verriegelt die erste Bratplatte.

4. Multifunktionsgarofen nach Anspruch 3, **dadurch gekennzeichnet, dass** die erste Verriegelungsvorrichtung einen Verriegelungshaken (181) und eine Verriegelungsplatte (182) umfasst, wobei der Verriegelungshaken drehbar am Ofendeckel angeordnet ist und sich an den ersten Aufnahmehohlraum anschmiegt; die Verriegelungsplatte am Ofendeckel angeordnet ist und sich an den ersten Aufnahmehohlraum anschmiegt; die erste Bratplatte mit einem Sockel und einer Verriegelungsöffnung ausgestattet ist, die Verriegelungsplatte in den Sockel eingesetzt wird, der Verriegelungshaken sich umdreht und dann die Verriegelungsöffnung festzieht, und die erste Bratplatte am Ofendeckel verriegelt wird.

5. Multifunktionsgarofen nach Anspruch 2, **dadurch gekennzeichnet, dass** der Ofenkörper mit einer zweiten Begrenzungsnut (21) an der Stelle neben dem inneren Hohlraum des Ofenkörpers ausgestattet ist, die zweite Bratplatte sich von dem zweiten Ölaustragskanal nach außen erstreckt, der zweite Ölaustragskanal in der zweiten Begrenzungsnut angeordnet ist, der Einlass des zweiten Ölaustragskanals mit der zweiten Bratplatte verbunden ist und der Auslass des zweiten Ölaustragskanals sich aus dem Ofenkörper heraus erstreckt und dem Ölauffangbehälter zugewandt ist.

6. Multifunktionsgarofen nach Anspruch 1, **dadurch gekennzeichnet, dass** die elastische Vorrichtung eine Grundplatte (31), einen ersten elastischen Tragarm (32) und einen zweiten elastischen Tragarm (33) umfasst, wobei der erste elastische Tragarm im Innenraum des Ofenkörpers drehbar angeordnet ist, der erste elastische Tragarm der linken und rechten Seite des Ofenkörpers zugewandt ist, der zweite elastische Tragarm im Innenraum des Ofenkörpers drehbar angeordnet ist, und der zweite elastische Tragarm der Vorder- und Rückseite des Ofenkörpers zugewandt ist, der erste elastische Stützarm und der zweite elastische Stützarm jeweils mit der Bodenplatte verbunden sind, der erste elastische Stützarm und der zweite elastische Stützarm gemeinsam die Bodenplatte antreiben, um auf und ab zu gehen, und die zweite Heizvorrichtung auf der Bodenplatte angeordnet ist, um der Bodenplatte zu folgen, um auf und ab zu gehen.

7. Multifunktionsgarofen nach Anspruch 1, **dadurch gekennzeichnet, dass** der Topfkörper mit einer Stütznase (62) ausgestattet ist, wobei die Stütznase mit einer zweiten Verriegelungsvorrichtung ausgestattet ist, der Ofenkörper mit einer dritten Begrenzungsnut an der Position ausgestattet ist, die der Stütznase entspricht; die Stütznase in der dritten Begrenzungsnut platziert ist, und die zweite Verriegelungsvorrichtung den Topfkörper auf dem Ofenkörper verriegelt.

8. Multifunktionsgarofen nach Anspruch 7, **dadurch gekennzeichnet, dass** die zweite Verriegelungsvorrichtung ein Gehäuse (81) und ein Paddel (82) umfasst, wobei das Gehäuse mit einer ersten Öffnung und einer zweiten Öffnung ausgestattet ist, das Paddel in dem inneren Hohlraum des Gehäuses angeordnet ist, ein Ende des Paddels sich aus der ersten Öffnung heraus erstreckt, um ein Einführteil zu bilden, das andere Ende des Paddels sich aus der zweiten Öffnung heraus erstreckt, um ein Schiebeteil zu bilden, der Ofenkörper mit einem Schlitz an der Position ausgestattet ist, die dem Einführteil entspricht, und das Einführteil in den Schlitz eingeführt wird und der Topfkörper an dem Ofenkörper verriegelt wird.

9. Multifunktionsgarofen nach Anspruch 2, **dadurch gekennzeichnet, dass** das erste Bedienfeld drehbar an der Außenwand des Ofenkörpers angeordnet ist und das erste Bedienfeld mit der zweiten Heizeinrichtung elektrisch verbunden ist.

10. Multifunktionsgarofen nach Anspruch 1, **dadurch gekennzeichnet, dass** die Oberfläche des Gitters mit Luftumlenkungsporen (71) beabstandet ist, das Gitter nach unten aus den Stützfüßen herausragt und die Stützfüße mit hochtemperaturbeständigen Fußhülsen ausgestattet sind.

## Revendications

1. Un four de cuisson multifonctionnel comprend un couvercle de four (1), un corps de four (2), un premier dispositif de chauffage (11), un second dispositif de chauffage (12), un dispositif élastique (3) et un premier panneau de commande (13), dans lequel le couvercle de four est articulé avec le corps de four, l'angle de rotation entre le couvercle de four et le corps de four est compris entre 0 degré et 180 degrés ; le premier dispositif de chauffage est placé sur la surface inférieure du couvercle du four, et le dispositif élastique est placé dans la cavité intérieure du corps du four ; le second dispositif de chauffage est placé dans la cavité intérieure du corps du four et relié au dispositif élastique, qui entraîne le second dispositif de chauffage vers le haut et vers le bas ;
Le four de cuisson multifonctionnel comprend également une première plaque de friture (4) et une deuxième plaque de friture (5) ; la première plaque de friture est disposée de manière amovible sur le couvercle du four et s'accroche au premier dispositif de chauffage ; la deuxième plaque de friture est disposée de manière amovible dans la cavité intérieure du corps du four et s'accroche au second dispositif de chauffage pour former un four de friture doté d'une fonction de chauffage double face ;
Le four de cuisson multifonctionnel comprend également un corps de marmite (6) et la seconde plaque de friture peut être remplacée par le corps de marmite, dans lequel le corps de marmite est placé dans la cavité intérieure du corps du four et s'accroche au second dispositif de chauffage ; le four de cuisson multifonctionnel comprend également un couvercle de marmite, qui est bouclé sur le corps de marmite pour former un four de marmite à réchaud ;
Le four de cuisson multifonctionnel comprend également un tamis filtrant supérieur et un gril (7) ; la première plaque de friture peut être remplacée par le tamis filtrant supérieur, la deuxième plaque de friture peut être remplacée par le corps du pot, le corps du pot est placé dans la cavité intérieure du corps du four et s'accroche au second dispositif de chauffage, et le gril est placé dans le corps du pot pour former un four.

2. Le four de cuisson multifonction selon la Revendication 1, **caractérisé en ce qu'** il comprend également une boîte de réception d'huile (15) qui est disposée sur la paroi extérieure du corps du four.

3. Le four de cuisson multifonctionnel selon la Revendication 2, **caractérisé en ce que** le couvercle du four est équipé d'une poignée (16) et un second panneau de commande (14) est disposé sur la poignée ; le second panneau de commande est électriquement connecté au premier dispositif de chauffage ; le couvercle du four est équipé d'une première cavité de maintien à la position correspondant au premier dispositif de chauffage ; le couvercle du four est équipé d'un premier dispositif de verrouillage (18) à la position adjacente à la première cavité de maintien et le couvercle du four est équipé d'une première rainure de limite (19) au niveau de la position adjacente à la première cavité de maintien ; la première plaque de friture s'étend vers l'extérieur à partir du premier canal d'évacuation d'huile, la première plaque de friture est placée dans la première cavité de maintien, le premier canal d'évacuation d'huile est placé dans la première rainure de limite ; l'entrée du premier canal d'évacuation d'huile est reliée à la première plaque de friture, la sortie du premier canal d'évacuation d'huile s'étend hors du couvercle du four et fait face à la boîte de réception d'huile, et le premier dispositif de verrouillage verrouille la première plaque de friture.

4. Le four de cuisson multifonctionnel selon la Revendication 3, **caractérisé en ce que** le premier dispositif de verrouillage comprend un crochet de verrouillage (181) et une plaque de verrouillage (182) dans lesquels le crochet de verrouillage est disposé de manière rotative sur le couvercle du four et s s'accroche à la première cavité de maintien ; la plaque de verrouillage est disposée sur le couvercle du four et s'accroche à la première cavité de maintien ; la première plaque de friture est équipée d'une douille et d'une porte de verrouillage, la plaque de verrouillage est insérée dans la douille, le crochet de verrouillage se retourne puis resserre la porte de verrouillage, et la première plaque de friture est verrouillée sur le couvercle du four.

5. Le four de cuisson multifonctionnel selon la Revendication 2, **caractérisé en ce que** le corps du four est équipé d'une deuxième rainure de limite (21) au niveau de la position adjacente à la cavité intérieure du corps du four, la deuxième plaque de friture s'étend vers l'extérieur du deuxième canal d'évacuation d'huile ; le deuxième canal d'évacuation d'huile est placé dans la deuxième rainure de limite, l'entrée du deuxième canal d'évacuation d'huile est reliée à la deuxième plaque de friture, et la sortie du deuxième canal d'évacuation d'huile s'étend à l'extérieur du corps du four et fait face à la boîte de réception d'huile.

6. Le four de cuisson multifonctionnel selon la Revendication 1, **caractérisé en ce que** le dispositif élastique comprend une plaque de base (31), un premier bras de support élastique (32) et un deuxième bras de support élastique (33), dans lequel le premier bras de support élastique est disposé de manière rotative dans la cavité intérieure du corps du four, le premier bras de support élastique fait face aux côtés gauche et droit du corps du four, le deuxième bras de support élastique est disposé de manière rotative dans la cavité intérieure du corps du four, et le deuxième bras de support élastique fait face aux côtés avant et arrière du corps du four ; le premier bras de support élastique et le deuxième bras de support élastique sont reliés respectivement à la plaque de base, le premier bras de support élastique et le deuxième bras de support élastique entraînent conjointement la plaque de base vers le haut et vers le bas, et le second dispositif de chauffage est disposé sur la plaque de base pour suivre la plaque de base vers le haut et vers le bas.

7. Le four de cuisson multifonctionnel selon la Revendication 1, **caractérisé en ce que** le corps du pot est équipé d'une patte de support (62) dans laquelle la patte de support est équipée d'un deuxième dispositif de verrouillage, le corps du four est équipé d'une troisième rainure de limite au niveau de la position correspondant à la patte de support ; la patte de support est placée dans la troisième rainure de limite, et le deuxième dispositif de verrouillage verrouille le corps du pot sur le corps du four.

8. Le four de cuisson multifonctionnel selon la Revendication 7, **caractérisé en ce que** le deuxième dispositif de verrouillage comprend un boîtier (81) et une palette (82) dans lequel le boîtier est équipé d'une première ouverture et d'une deuxième ouverture ; la palette est placée dans la cavité intérieure du boîtier, une extrémité de la palette s'étend hors de la première ouverture pour former une partie d'insertion, l'autre extrémité de la palette s'étend hors de la deuxième ouverture pour former une partie de poussée, le corps du four est équipé d'une fente à la position correspondant à la partie d'insertion et la partie d'insertion est insérée dans la fente et le corps du pot est verrouillé dans le corps du four.

9. Le four de cuisson multifonctionnel selon la Revendication 2, **caractérisé en ce que** le premier panneau de commande est disposé de manière rotative sur la paroi extérieure du corps du four et le premier panneau de commande est connecté électriquement au second dispositif de chauffage.

10. Le four de cuisson multifonctionnel selon la Revendication 1, **caractérisé en ce que** la surface du gril est espacée des orifices de déflexion d'air (71), le gril s'étend vers le bas hors des pieds de support, et les pieds de support sont équipés de manchons de pied résistants aux températures élevées.
